# FASCICULE DE BREVET EUROPEEN

(11) **EP 2 361 176 B1**
(45) Date de publication et mention de la délivrance du brevet: **12.11.2014**
(21) Numéro de dépôt: 09795493.7
(22) Date de dépôt: 23.11.2009
(51) Int. Cl.: B29C 49/64, B29C 35/08

(54) **PROCÉDÉ ET DISPOSITIF DE CHAUFFAGE PAR INFRAROUGE DE PRÉFORMES PLASTIQUES**
VERFAHREN UND VORRICHTUNG ZUR INFRAROTERWÄRMUNG VON KUNSTSTOFFVORFORMLINGEN
METHOD AND DEVICE FOR INFRARED HEATING OF PLASTIC PREFORMS

(30) Priorité: 24.11.2008 FR 0806585
(43) Date de publication de la demande: 31.08.2011
(73) Titulaire: Lize, Grégoire, 69006 Lyon (FR)
(72) Inventeur: Lize, Grégoire, 69006 Lyon (FR)
(74) Mandataire: Verriest, Philippe
(86) Numéro de dépôt international: PCT/FR2009/052257
(87) Numéro de publication internationale: WO 2010/058139

(56) Documents cités:
- WO-A1-2004/031671
- WO-A1-2008/109305
- WO-A2-2004/018114
- JP-A- 2003 236 922

## Description

La présente invention concerne le domaine des matières plastiques et leurs transformations en vue de la fabrication de produits d'emballage ou de conditionnement. L'invention concerne particulièrement un procédé et un dispositif de production de contenants à partir de préformes en matière plastique telles que des bouteilles ou des bidons.

Les matières plastiques comme les polyesters et notamment le polyéthylène téréphtalate (PET) et ses copolymères sont bien connus pour la fabrication de toutes sortes de matériaux d'emballage ou de conditionnement, tels que par exemple des bouteilles, bidons, boîtes, films, sacs, etc.

Dans l'industrie, la fabrication de contenants est en majorité effectuée par des machines spécialisées appelées souffleuses de bouteille PET, à partir d'une préforme qui est ensuite soufflée pour se transformer en bouteille. Certaines de ces machines sont capables de produire jusqu'à 50000 contenants par heure pour les contenants de plus petit volume. Cette production à la chaine se déroule en plusieurs étapes.

La première étape consiste à alimenter les machines en préformes. Les préformes passent d'une trémie d'alimentation à un convoyeur chargeur qui permet leur insertion dans la chaine de production tout en leur conférant une orientation prédéfinie. Les préformes sont ensuite dirigées vers un module de chauffage situé à l'entrée de la souffleuse de bouteilles.

La seconde étape consiste à chauffer les préformes. Les préformes sont chauffées en continu le long de leur passage dans le module de chauffage. Ce chauffage est effectué par des émetteurs infrarouges.

Ces équipements permettent des montées rapides en température est sont communément employés dans divers secteurs de l'industrie notamment pour la chauffe de pièces métalliques en carrosserie en passant par le séchage de papier ou de colles industrielles.

Pendant l'étape de chauffage, les préformes tournent constamment autour d'eux-mêmes, de façon à garantir une distribution optimale et symétrique de la chaleur.

De plus durant cette étape de chauffage, il est nécessaire dans les conditions susmentionnées d'effectuer une importante injection d'air à l'intérieur du module de chauffage afin de stabiliser les températures de surfaces des préformes et éviter les surchauffes de peau.

La troisième étape consiste à étirer et souffler les préformes. Cette étape comprend deux phases : l'étirage et le pré-étirage, qui se déroulent simultanément, par la descente d'une barre d'étirage, l'introduction d'air comprimé à basse pression, et le soufflage final par air comprimé à haute pression, grâce auquel les bouteilles prennent leur forme définitive.

La dernière étape consiste à sortir les bouteilles. Les bouteilles finies sont prélevées des stations d'étirage-soufflage au moyen d'un groupe de pinces puis sont sorties pour être dirigées vers les machines de remplissage.

L'inconvénient majeur de ce procédé de production réside dans la forte consommation en énergie qu'il engendre pour sa mise en oeuvre. Cette forte consommation est imputable d'une part au fonctionnement des émetteurs infrarouges et d'autre part au fait de devoir refroidir la surface des préformes pour éviter les surchauffes de peau.

Jusqu'à présent il était expliqué par les fabricants de souffleuses ainsi que par les fabricants d'émetteurs à infrarouges électrique halogène que la meilleure façon de monter rapidement des préformes en température était d'utiliser des infrarouges dit court typiquement compris entre 1 et 2 µm de longueur d'onde et dont le pic d'émission est compris entre 1 à 1,3 µm.

Ainsi, les documents FR2878185, WO95/11791 décrivent des procédés de ce type dans lequel la longueur d'onde des rayonnements utilisés est compris entre 0,7 et 1,6 µm.

D'autres types de dispositifs d'émission infrarouge ont été envisagés. Ainsi, le document US4385089 décrit pour sa part l'utilisation d'un four de préchauffage avec des panneaux radiants avec un maximum d'émission à 2 µm.

Il est également connu du document US2007/0096352 d'utiliser des ensembles de diodes laser présentant une longueur d'onde d'émission de l'ordre de 2 µm.

Ce type de diode laser ne peut toutefois pas être utilisé de façon simple car les faisceaux présentent un faible écart angulaire et obligent à réaliser un balayage des préformes.

D'autres procédés de ce type sont decrits dans les documents WO 02/32652 et WO 2008/109305.

Enfin, le document GB2095611 décrit un procédé dans lequel le chauffage des préformes est réalisé avec une alternance de phases de chauffage à haute puissance et de chauffage à basse puissance, des lampes à quartz étant alimentées avec des puissances différentes pendant ces deux phases de façon à produire un rayonnement d'une longueur d'onde de l'ordre de 1,15 µm pendant une première phase, et de 2,9 µm pendant une seconde phase.

Les phases d'alimentation produisant un pic d'émission à 2,9 µm correspondent à des phases dans lesquels l'énergie radiante émise est insignifiante, selon les termes de ce document. Ces phases permettent de maintenir les lampes en tension et d'éviter un arrêt complet entre deux phases de forte puissance.

La présente invention vise à résoudre tout ou partie des inconvénients de l'état de la technique.

A cet effet, la présente invention a pour objet un procédé de production de contenants tels des bouteilles ou des bidons, à partir de préformes de préférence en matière plastique comprenant les étapes d'alimentation en préformes, de préchauffage des préformes par rayonnement dans un module de chauffage, le rayonnement étant généré par au moins un émetteur comprenant un filament métallique logé dans une enceinte remplie d'un gaz halogène, et - d'étirage et/ou soufflage des préformes par une souffleuse, caractérisé en ce que le rayonnement présente un pic d'émission correspondant à une longueur d'onde comprise entre 1,7 µm et 5 µm, et en ce que le filament métallique présente une surface d'émission telle que le rapport entre une puissance d'alimentation de l'émetteur et la surface d'émission du filament est compris entre 0,080 et 0,250 W/mm².

Les dispositions selon la présente invention permettent d'utiliser une longueur d'onde de pic d'émission supérieure à celle utilisée dans l'état de la technique avec des émetteurs halogènes tout en conservant une densité de puissance émise suffisante pour obtenir un chauffage efficace des préformes.

L'utilisation des longueurs d'ondes selon l'invention occasionne un chauffage en surface des préformes par radiation, contrairement aux longueurs d'ondes plus courtes qui pénètrent dans une couche superficielle de la matière d'une épaisseur de l'ordre de 10 à 15 µm.

Dans le cas de l'utilisation de longueur d'onde courtes selon l'état de la technique, étant donnée l'épaisseur de polymère chauffé, une cristallisation peut avoir lieu lorsque la température dépasse une température seuil.

Grâce au chauffage surfacique dans la gamme de longueur d'onde selon l'invention, une telle cristallisation n'est pas entraînée, même lorsque la température en surface augmente au-delà d'un seuil de cristallisation.

Le chauffage de l'intérieur de la préforme est obtenu par conduction.

L'utilisation d'émetteurs infrarouges électriques halogènes émettant un rayonnement infrarouge de longueur d'onde supérieure à ce qui était employé jusqu'à présent, c'est-à-dire un rayonnement avec une longueur d'onde à 1,2 µm, apporte à lui seul environ de 35 à 50% de l'accroissement du rendement par rapport à une utilisation standard à 1,2 µm.

Avantageusement, le rapport entre la puissance d'alimentation de l'émetteur et la surface d'émission du filament est compris entre 0,150 et 0,200 et de préférence entre 0,160 et 0,175 W/mm².

Selon un mode de réalisation, le rayonnement présente un pic d'émission correspondant à une longueur d'onde comprise entre 2 µm et 4 µm.

Avantageusement, les préformes sont soumise à un environnement sans soufflage d'un flux de fluide de refroidissement ou dans un environnement ou le soufflage ou l'insufflation de fluide de refroidissement présente un débit rapporté à la puissance d'alimentation de l'émetteur inférieur à 30 m³/kW/h lors de la phase de préchauffage.

Il est à noter que les dispositions selon l'invention qui évitent de provoquer une cristallisation même à haute température permettent également de limiter ou de supprimer le refroidissement par soufflage d'air des préformes.

Il n'est plus nécessaire d'insuffler de grandes quantités d'air dans le module de chauffage pour éviter les surchauffes des surfaces des préformes.

En effet, il a même été montré durant la mise en oeuvre de l'invention, que au contraire de ce qui était attendu, l'air réduisait le rendement global, car il dissipait l'énergie concentrée au niveau de la surface de la préforme.

Selon un mode de réalisation, de l'air est insufflé lors de l'étape de préchauffage de façon à créer un flux de fluide de refroidissement orienté vers au moins une partie d'un émetteur.

La présente invention a également pour objet un dispositif pour la production de contenants tels des bouteilles ou de bidons, à partir de préformes de préférence en matière plastique comprenant un convoyeur de préformes, un module de chauffage comprenant au moins un émetteur infrarouge comprenant un filament métallique logé dans une enceinte remplie d'un gaz halogène, une souffleuse de bouteilles, caractérisé en ce que l'au moins un émetteur infrarouge produit un rayonnement présentant un pic d'émission correspondant à une longueur d'onde comprise entre 1,7 µm et 5 µm, et en ce que le filament métallique présente une surface d'émission telle que le rapport entre une puissance d'alimentation de l'émetteur et la surface d'émission du filament est comprise entre 0,080 et 0,250 W/mm².

Avantageusement, le rapport entre la puissance d'alimentation de l'émetteur et la surface d'émission du filament est comprise entre 0,150 et 0,200 et de préférence entre 0,160 et 0,175 W/mm².

Selon un mode de réalisation, l'au moins un émetteur infrarouge produit un rayonnement présentent un pic d'émission correspondant à une longueur d'onde comprise entre 2 µm et 4 µm.

Avantageusement, le filament présente un profil comprenant des portions de forme polygonale ou de forme polygonale présentant des sommets arrondis.

Selon un mode de réalisation, le filament présente un profil présentant des portions dont la projection sur un plan forme un polygone étoilé, comprenant de préférence des sommets arrondis.

Avantageusement, un flux de fluide de refroidissement généré par une insuffleuse est uniquement orienté vers les émetteurs infrarouges.

Selon un mode de réalisation, au moins une paroi de préférence en quartz est intercalée entre les émetteurs infrarouges et les préformes de façon à isoler les préformes du flux de fluide de refroidissement.

Cette disposition permet d'isoler les préformes de l'air circulant autour des émetteurs.

Selon le même mode de réalisation, le module de chauffage comprend des réflecteurs infrarouges adaptés à la longueur d'onde de l'émetteur. Avantageusement, les réflecteurs infrarouges sont disposés de part et d'autre de l'au moins un émetteur, par exemple de telle sorte que les préformes peuvent être alimentés entre l'au moins un émetteur et l'un des réflecteurs infrarouges.

Une bonne mise en oeuvre de l'environnement par l'utilisation de réflecteurs infrarouges adaptés à la longueur d'onde du rayonnement et une gestion de l'air sur les émetteurs et de l'ambiance du four permet encore d'améliorer le rendement de 15 à 20 % par rapport à l'état de la technique. Les réflecteurs employés peuvent par exemple se rapprocher des caractéristiques idéales d'un corps noir.

De toute façon, l'invention sera bien comprise à l'aide de la description qui suit, en référence aux dessins schématiques annexés représentant, à titre d'exemples non limitatifs, d'une partie du dispositif pour la production de contenants selon l'invention.
La figure 1 représente une vue synoptique du dispositif pour la production de contenants selon l'invention.
La figure 2 représente une vue schématique de dessus du module de chauffage du dispositif selon un premier mode de réalisation de l'invention.
La figure 3 représente une vue schématique de profil de ce même module de chauffage du dispositif selon le premier mode de réalisation de l'invention.
La figure 4 représente une vue schématique de profil du module de chauffage du dispositif selon un deuxième mode de réalisation de l'invention.
La figure 5 représente une répartition de l'énergie émise suivant la longueur d'onde correspondant au pic d'énergie émise par une source infrarouge de type lampe à quartz.
La figure 6 représente l'échauffement en température occasionné sur la peau des préformes dans un système classique et avec le procédé selon l'invention.
La figure 7 représente une coupe transversale d'un émetteur utilisé dans un dispositif et un procédé selon l'invention, cette coupe ne représentant qu'une partie des enroulements du filament.

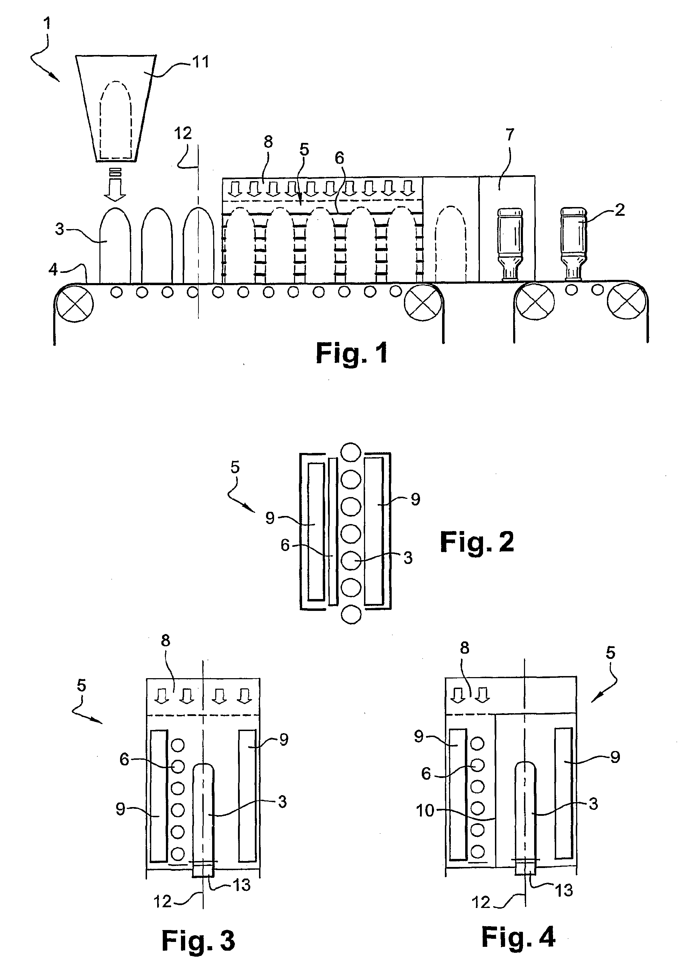

Selon l'invention, en référence à la figure 1, un dispositif 1 pour la production de contenants 2 comprend un convoyeur 3 de préformes 4, un module de chauffage 5 comprenant des émetteurs infrarouges 6 et une insuffleuse d'air 8 adossée à celui-ci.

Le convoyeur 3 est équipé de moyens de mise en rotation 13 représentés à la figure 3 permettant de mettre continuellement les préformes en rotation autour d'un axe de rotation 12. Afin de permettre une meilleure pénétration des infrarouges dans la matière, la vitesse de rotation peut être réduite par rapport à celle d'un dispositif conventionnel qui utilisait cette vitesse de rotation pour refroidir la surface des préformes et ainsi éviter l'effet de peau.

Les émetteurs infrarouges 6 sont disposés selon un plan sensiblement parallèle au plan décrit par le passage des préformes 3 lors de leur passage dans le module de chauffage 5.

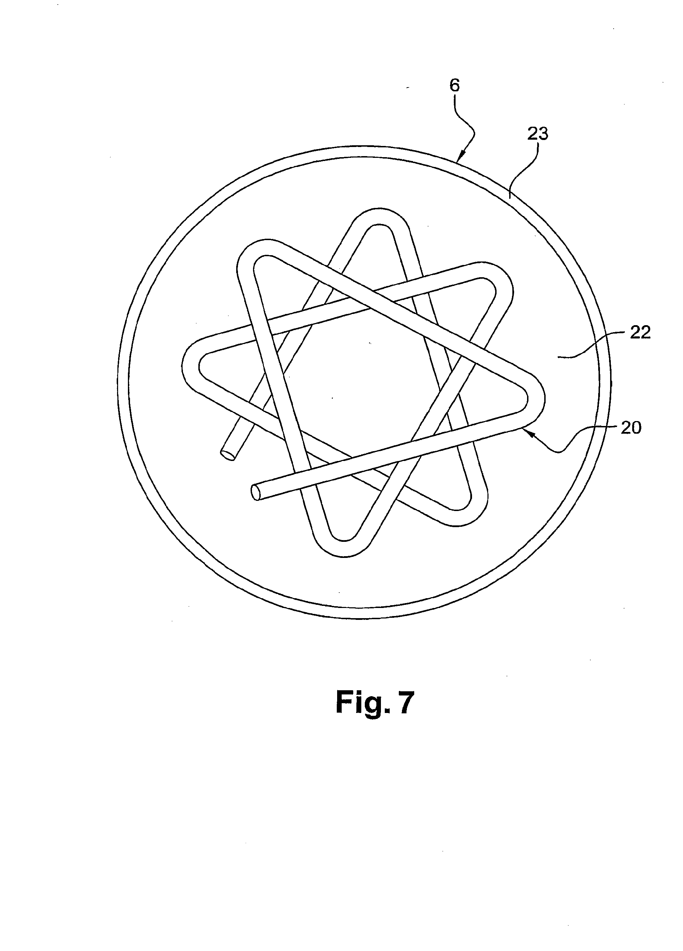

Comme cela est représenté sur la figure 7, les émetteurs infrarouges 6 selon l'invention sont des émetteurs de type halogène, comprenant un filament métallique 20 logé dans une enceinte 22 remplie d'un gaz halogène. Le filament 20 est réalisé par exemple en tungstène. La paroi d'enceinte 23 de l'émetteur peut par exemple être réalisée en quartz.

De préférence, l'émetteur est réalisé de forme allongée, l'enceinte étant tubulaire et scellée à ses deux extrémités. Le filament est boudiné ou torsadé autour d'une direction principale dans l'axe de l'émetteur.

Le profil du filament vu en coupe projeté sur un plan perpendiculaire à la direction principale de l'émetteur correspond sensiblement à une forme de polygonale et/ou d'étoile aux sommets arrondie ou de type hypothrochoïde, ce type de courbe permettant de constituer une approximation d'une forme polygonale.

Cette forme correspondant au développement d'un polygone étoilé permet d'assurer une plus grande surface efficace d'émission. Dans l'exemple représenté sur la figure 7, une forme polygonale étoilée à 8 sommets arrondis est proposée. Toutefois, il est possible d'envisager d'autres profils de filament dans le but de présenter une surface d'émission augmentée, notamment d'autres formes polygonales.

En outre, le diamètre du filament est épais par rapport à un émetteur de type classique de façon à obtenir un rapport entre la puissance d'alimentation et la surface de filament compris de préférence entre 0,160 et 0,175 W/mm².

Le diamètre du filament est de préférence compris entre 0,4 et 0,7 mm dans différents exemples de réalisations de l'invention. La dimension du cylindre englobant le profil du filament est de préférence compris entre 14 et 21 mm.

Ainsi, un exemple d'émetteur de l'état de la technique comprend un filament d'une surface émettrice de 4 104 mm² pour une puissance de 2 000 W (+/- 5%).

Selon un exemple de réalisation de l'invention, un émetteur comprend pour sa part un filament d'une surface émettrice de 12 040 mm² pour une puissance de 2 000 W (+/- 5%).

Ainsi la surface émettrice est augmentée d'un facteur supérieur ou égal à 3 pour une même puissance d'émetteur par rapport aux dispositifs selon l'état de la technique.

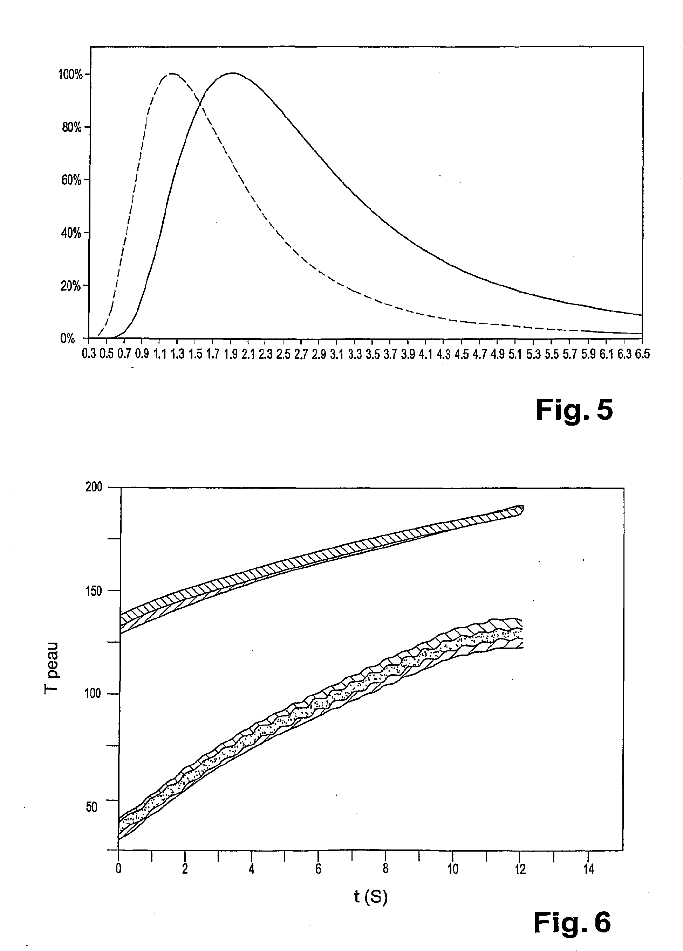

Il est à noter que la figure 5 décrit la répartition de l'énergie dans le cas de deux types d'émetteurs, l'un émettant avec un pic d'émission à 1, 2 µm, et l'autre avec un pic d'émission à 1, 9 µm. Il apparaît clairement sur ce diagramme que l'énergie transmise est répartie de façon plus diffuse lorsque la longueur d'onde augmente. Le module de chauffage 5 comprend également des réflecteurs infrarouges 9 disposés selon un plan sensiblement parallèle au plan dans lequel s'inscrivent les émetteurs infrarouges 6 et de part et d'autre de ces mêmes émetteurs infrarouges 6 de manière à limiter les pertes d'énergie à l'intérieur du module de chauffage 5.

Sur le module de chauffage 5, il est disposé une insuffleuse d'air 8 injectant continuellement de l'air à l'intérieur du module de chauffage 5. Cette insuffleuse d'air 8 peut présenter plusieurs configurations et caractéristiques différentes suivant le besoin. Elle peut par exemple être disposée sur un quelconque côté du module de chauffage 5, le but étant d'apporter suffisamment d'air à l'intérieur du module de chauffage 5 afin d'éviter la surchauffe de certaines surfaces se trouvant à l'intérieur du module de chauffage 5, en particulier le culot des émetteurs. L'écoulement d'air engendré peut également être laminaire ou turbulent.

Avantageusement, l'insuffleuse d'air présente un débit d'air rapporté à la puissance d'alimentation de l'émetteur inférieur à 30 m³/kW/h, et est orientée de façon à ne souffler de l'air que sur les culots et tubes des lampes à quartz. En effet, les dispositions selon l'invention limitent ou suppriment la nécessité de procéder à un refroidissement par soufflage d'air sur les préformes.

La souffleuse 7 est quant à elle disposée en sortie du module de chauffage 5 à une distance relativement courte de celui-ci pour éviter un trop fort refroidissement de préformes 3.

Au début du cycle de production, les préformes 3 sont au préalable chargées dans une trémie 11. En sortant de cette trémie 11, les préformes 3 sont successivement disposées sur le convoyeur 4 selon une orientation prédéterminée, généralement avec le goulot tourné vers le bas. Une fois sur le convoyeur 4, les préformes 3 sont maintenues à l'aide de mandrins et animées d'un mouvement de rotation autour de leur axe de rotation 12 par l'intermédiaire des moyens de mise en rotation 13 disposés sur le convoyeur 4, puis elles sont dirigées vers l'entrée du module de chauffage 5.

Tout au long de leur passage dans le module de chauffage 5, un chauffage continu par rayonnement infrarouge est appliqué aux préformes 3. Ce rayonnement est produit par les émetteurs infrarouges 6 disposés le long du module de chauffage 5.

Selon l'invention, ce rayonnement est émis à une longueur d'onde entre 1,7 µm et 5 µm. L'utilisation des longueurs d'ondes selon l'invention occasionne un chauffage par radiation de la surface des préformes, contrairement aux longueurs d'ondes plus courtes qui pénètrent dans une couche superficielle de la matière d'une épaisseur de l'ordre de 10 µm.

Dans le cas de l'utilisation de longueur d'onde inférieures à 1,7 étant donnée l'épaisseur de polymère chauffé directement, une cristallisation peut avoir lieu lorsque la température dépasse une température seuil.

Grâce au chauffage surfacique dans la gamme de longueur d'onde selon l'invention, une telle cristallisation n'est pas entraînée, même lorsque la température en surface augmente au-delà d'un seuil de cristallisation.

Le chauffage de l'intérieur de la préforme est obtenu par conduction.

La figure 6 représente les profils de température dans un dispositif selon l'invention (en haut), et le profil de température dans un dispositif de chauffage selon l'état de la technique en bas.

Il apparaît sur ces courbes que dans un dispositif selon l'état de la technique, des mesures sont prises pour éviter que la température ne dépasse la température de cristallisation du polymère (qui est de l'ordre de 150°C).

Dans un dispositif selon l'invention, cette température en surface des préformes (Tpeau) peut dépasser 150°C, sans conséquences dommageable pour les préformes.

- L'énergie résultante du rayonnement infrarouge se convertit en chaleur et se diffuse par conduction à partir de l'intérieur du matériau. Le chauffage est amélioré par effet de four à l'aide des parois 9.

Un gradient thermique se crée entre l'intérieur du matériau en PET et sa surface, ce qui va réduire la nécessité d'injecter de grandes quantités d'air dans le module de chauffage.

A la sortie du module de préchauffage 5, les préformes 3 chauffées à une température typiquement de 120°C rentrent dans la souffleuse 7. La souffleuse 7 possède un moule ayant la forme complémentaire prédéterminée de celle de la bouteille 2 à produire. La préforme 3 est prise dans ce moule puis soufflée afin de donner à la bouteille 2 sa forme définitive. La bouteille 2 est ensuite évacuée par un deuxième convoyeur 4 disposé à la sortie de la souffleuse.

Dans un second mode de réalisation présenté à la figure 4, il est possible d'adjoindre au module de chauffage 5 une paroi 10 ayant un bon coefficient de transmission de préférence en quartz. Cette paroi 10 est disposée entre les émetteurs infrarouges 6 et les préformes 3. Elle permet de conditionner les mouvements d'air injecté par l'insuffleuse d'air 8 sur les seuls émetteurs infrarouges 6. En effet, avec ces émetteurs infrarouges 6 et le mode de transfert thermique qu'ils impliquent, il n'est plus nécessaire d'entretenir un mouvement d'air autour des préformes 3, ce mouvement d'air est au contraire défavorable au gain de rendement recherché.

Enfin, la mise en place du procédé selon l'invention ne nécessite pas de changements ou d'adaptations importantes sur les dispositifs existant. Il n'est nécessaire que de placer les émetteurs différemment. En effet, avec le procédé et son dispositif de mise en oeuvre selon l'invention, il est possible de tapisser la surface occupée par les émetteurs 6 d'une façon moins dense qu'avec des émetteurs émettant dans l'infrarouge court et sur moins de surface totale. Il suffit également de mettre en place des réflecteurs infrarouges 9 très performants et de réduire les quantités d'air introduite dans le module de chauffage 5 au minimum nécessaire au fonctionnement des émetteurs infrarouges 6.

Ainsi, grâce à la mise en place d'un procédé et de son dispositif 1 selon l'invention, l'industrie des contenants 2 et autres emballages plastiques voit son rendement augmenter de 40 à 60% surtout de par la baisse de la consommation d'énergie électrique nécessaire à l'alimentation des émetteurs infrarouges 6 et à l'insuffleuse d'air 8 ainsi qu'un gain de temps durant la phase de chauffage des préformes 3. Avec ce procédé, les temps de traitement sont réduits de 20 à 50%, ce qui augmente considérablement la productivité des contenants mais surtout réduit considérablement la consommation électrique de 40 à 60 %.

Comme il va de soi, l'invention ne se limite pas aux seules formes d'exécution de ce dispositif 1 ni à son application selon son procédé, décrits ci-dessus à titre d'exemple, mais elle embrasse au contraire toutes les variantes, dans le cadre des revendications annexées.

## Revendications

1. Procédé de production de contenants tels des bouteilles ou des bidons, à partir de préformes de préférence en matière plastique comprenant les étapes :
- d'alimentation en préformes,
- de préchauffage des préformes par rayonnement dans un module de chauffage, le rayonnement étant généré par au moins un émetteur comprenant un filament métallique logé dans une enceinte remplie d'un gaz halogène, et
- d'étirage et/ou soufflage des préformes par une souffleuse,
**caractérisé en ce que**
le rayonnement présente un pic d'émission correspondant à une longueur d'onde comprise entre 1,7 µm et 5 µm, et **en ce que** le filament métallique présente une surface d'émission telle que le rapport entre la puissance d'alimentation de l'émetteur et la surface d'émission du filament est compris entre 0,080 et 0,250 W/mm².

2. Procédé selon la revendication 1, dans lequel que le rapport entre la puissance d'alimentation de l'émetteur et la surface d'émission du filament est compris entre 0,150 et 0,200 et de préférence entre 0,160 et 0,175 W/mm².

3. Procédé selon la revendication 1 dans lequel le rayonnement a une longueur d'onde comprise entre 2 µm et 4 µm.

4. Procédé selon l'une des revendications précédentes dans lequel les préformes sont soumise à un environnement sans soufflage d'un flux de fluide de refroidissement ou dans un environnement ou le soufflage ou l'insufflation de fluide de refroidissement présente un débit rapporté à la puissance d'alimentation de l'émetteur inférieur à 30 m³/kW/h lors de la phase de préchauffage.

5. Procédé selon la revendication 4 dans lequel un fluide de refroidissement est insufflé lors de l'étape de préchauffage de façon à créer un courant de fluide de refroidissement orienté vers au moins une partie d'un émetteur.

6. Dispositif (1) pour la production de contenants (2) tels des bouteilles ou de bidons, à partir de préformes (3) de préférence en matière plastique comprenant :
- un convoyeur (4) de préformes (3),
- un module de chauffage (5) comprenant au moins un émetteur infrarouge (6) comprenant un filament métallique logé dans une enceinte remplie d'un gaz halogène,
- une souffleuse (7) de bouteilles,
**caractérisé en ce que** l'au moins un émetteur infrarouge (6) produit un rayonnement présentant un pic d'émission correspondant à une longueur d'onde comprise entre 1,7 µm et 5 µm, et **en ce que** le filament métallique présente une surface d'émission telle que le rapport entre une puissance d'alimentation de l'émetteur et la surface d'émission du filament est compris entre 0,080 et 0,250 W/mm².

7. Dispositif selon la revendication 6, dans lequel que le rapport entre la puissance d'alimentation de l'émetteur et la surface d'émission du filament est compris entre 0,150 et 0,200 et de préférence entre 0,160 et 0,175 W/mm².

8. Dispositif (1) selon l'une des revendications 6 à 7, dans lequel l'au moins un émetteur infrarouge (6) produit un rayonnement présentent un pic d'émission correspondant à une longueur d'onde comprise entre 2 µm et 4 µm.

9. Dispositif (1) selon l'une des revendications 6 à 8, dans lequel le filament présente un profil comprenant des portions de forme polygonale ou de forme polygonale présentant des sommets arrondis.

10. Dispositif (1) selon la revendication 9, dans lequel le filament présente un profil présentant des portions dont la projection sur un plan forme un polygone étoilé, comprenant de préférence des sommets arrondis.

11. Dispositif (1) selon l'une des revendications 6 à 10 dans lequel un flux de fluide de refroidissement généré par une insuffleuse d'air est uniquement orienté vers les émetteurs infrarouges (6).

12. Dispositif (1) selon la revendication 11 dans lequel au moins une paroi de préférence en quartz est intercalée entre les émetteurs infrarouges (6) et les préformes (3) de façon à isoler les préformes du flux de fluide de refroidissement.

13. Dispositif (1) selon l'une des revendications 6 à 12, dans lequel le module de chauffage (5) comprend des réflecteurs infrarouges (9) adaptés à la longueur d'onde de l'émetteur.

## Patentansprüche

1. Herstellungsverfahren von Behältern, wie zum Beispiel von Flaschen oder Kanistern ausgehend von Vorformlingen vorzugsweise aus Kunststoff, das die folgenden Schritte umfasst:
- Zuführen von Vorformlingen,
- Erwärmen der Vorformlinge durch Strahlung in einem Heizmodul, wobei die Strahlung von mindestens einem Sender erzeugt wird, der einen metallischen Glühfaden umfasst, der in einem Einschluss, der mit einem Halogengas gefüllt ist, untergebracht ist, und
- Strecken und/oder Blasen der Vorformlinge durch ein Gebläse,
**dadurch gekennzeichnet, dass**
die Strahlung eine Sendespitze aufweist, die einer Wellenlänge zwischen 1,7 µm und 5 µm entspricht, und dass der metallische Glühfaden eine Sendeoberfläche derart aufweist, dass das Verhältnis zwischen der Versorgungsleistung des Senders und der Sendeoberfläche des Glühfadens zwischen 0,080 und 0,250 W/mm² liegt.

2. Verfahren nach Anspruch 1, bei dem das Verhältnis zwischen der Versorgungsleistung des Senders und der Sendeoberfläche des Glühfadens zwischen 0,150 und 0,200 und vorzugsweise zwischen 0,160 und 0,175 W/mm² liegt.

3. Verfahren nach Anspruch 1, bei dem die Strahlung eine Wellenlänge zwischen 2 µm und 4 µm hat.

4. Verfahren nach einem der vorhergehenden Ansprüche, bei dem die Vorformlinge einer Umgebung ohne Blasen eines Kühlmittelstroms oder einer Umgebung, in der das Blasen oder Einblasen von Kühlmittel einen Durchsatz im Verhältnis zur Versorgungsleistung des Senders kleiner als 30 m³/kW/h bei der Vorwärmphase aufweist, ausgesetzt sind.

5. Verfahren nach Anspruch 4, bei dem ein Kühlmittel bei dem Vorwärmschritt derart eingeblasen wird, dass ein Kühlmittelstrom, der zu mindestens einem Teil eines Senders gerichtet ist, geschaffen wird.

6. Vorrichtung (1) zur Herstellung von Behältern (2), wie zum Beispiel von Flaschen oder Kanistern, ausgehend von Vorformlingen (3) vorzugsweise aus Kunststoff, die Folgendes umfasst:
- einen Förderer (4) von Vorformen (3
- ein Erwärmungsmodul (5), das mindestens einen Infrarotsender (6) umfasst, der einen metallischen Glühfaden umfasst, der in einem Einschluss, der mit einem Halogengas gefüllt ist, untergebracht ist,
- eine Flaschenblasmaschine (7),
**dadurch gekennzeichnet, dass** der mindestens eine Infrarotsender (6) eine Strahlung erzeugt, die eine Sendespitze aufweist, die einer Wellenlänge zwischen 1,7 µm und 5 µm entspricht, und dass der metallische Glühfaden eine Sendeoberfläche derart aufweist, dass das Verhältnis zwischen einer Zuführleistung des Senders und der Sendeoberfläche des Glühfadens zwischen 0,080 und 0,250 W/mm² liegt.

7. Vorrichtung nach Anspruch 6, bei der das Verhältnis zwischen der Zuführleistung des Senders und der Sendeoberfläche des Glühfadens zwischen 0,150 und 0,200 und vorzugsweise zwischen 0,160 und 0,175 W/mm² liegt.

8. Vorrichtung (1) nach einem der Ansprüche 6 bis 7, bei der mindestens ein Infrarotsender (6) eine Strahlung erzeugt, die eine Sendespitze aufweist, die einer Wellenlänge zwischen 2 µm und 4 µm entspricht.

9. Vorrichtung (1) nach einem der Ansprüche 6 bis 8, bei der der Glühfaden ein Profil aufweist, das Abschnitte in vieleckiger Form oder in vieleckiger Form mit gerundeten Scheiteln aufweist.

10. Vorrichtung (1) nach Anspruch 9, bei der der Glühfaden ein Profil aufweist, das Abschnitte aufweist, deren Projektion auf eine Ebene ein sternförmiges Vieleck bildet, das vorzugsweise gerundete Scheitel aufweist.

11. Vorrichtung (1) nach einem der Ansprüche 6 bis 10, bei der ein Kühlmittelstrom, der von einer Lufteinblasvorrichtung erzeugt wird, ausschließlich zu den Infrarotsendern (6) gerichtet ist.

12. Vorrichtung (1) nach Anspruch 11, bei der mindestens eine Wand vorzugsweise aus Quarz zwischen die Infrarotsender (6) und die Vorformlinge (3) derart eingefügt ist, dass die Vorformlinge von dem Kühlmittelstrom getrennt sind.

13. Vorrichtung (1) nach einem der Ansprüche 6 bis 12, bei der das Erwärmungsmodul (5) Infrarotreflektoren (9) umfasst, die an eine Wellenlänge des Senders angepasst sind.

## Claims

1. A method for producing containers such as bottles or cans, from preforms preferably from plastic material comprising the steps of:
- supplying the preforms,
- preheating the preforms by radiation in a heating module, the radiation being generated by at least one emitter comprising a metal filament housed in an enclosure filled with a halogen gas, and
- stretching and/or blowing the preforms by a blower,
**characterized in that**
the radiation exhibits an emission peak corresponding to a wavelength ranging between 1.7 µm and 5 µm, and **in that** the metal filament exhibits an emission surface such that the ratio of the power supply of the emitter and the emission surface of the filament ranges between 0.080 and 0.250 W/mm².

2. The method according to claim 1, in which the ratio of the power supply of the emitter and the emission surface of the filament ranges between 0.150 and 0.200 and preferably between 0.160 and 0.175 W/mm².

3. The method according to claim 1 in which the radiation has a wavelength ranging between 2 µm and 4 µm.

4. The method according to any of the preceding claims in which the preforms are subjected to a no-blow environment of a flow of cooling fluid or in an environment where the blowing or insufflation of the cooling fluid exhibits a flowrate brought to the power supply of the emitter lower than 30 m³/kW/h during the preheating phase.

5. The method according to claim 4 in which a cooling fluid is insufflated during the preheating step in such a manner as to create a current of cooling fluid directed towards at least one part of an emitter.

6. A device (1) for producing containers (2) such as bottles or cans, from preforms (3) preferably from plastic material comprising:
- a conveyer (4) of preforms (3),
- a heating module (5) comprising at least one infrared emitter (6) comprising a metal filament housed in an enclosure filled with a halogen gas,
- a blower (7) of bottles,
**characterized in that** at least one infrared emitter (6) produces radiation exhibiting an emission peak corresponding to a wavelength ranging between 1.7 µm and 5 µm, and **in that** the metal filament exhibits an emission surface such that the ratio of a power supply of the emitter and the emission surface of the filament ranges between 0.080 and 0.250 W/mm².

7. The device according to claim 6, in which the ratio of the power supply of the emitter and the emission surface of the filament ranges between 0.150 and 0.200 and preferably between 0.160 and 0.175 W/mm².

8. The device (1) according to any of claims 6 to 7, in which the at least one infrared emitter (6) produces radiation exhibiting an emission peak corresponding to a wavelength ranging between 2 µm and 4 µm.

9. The device (1) according to any of claims 6 to 8, in which the filament exhibits a profile comprising portions with a polygonal shape or with a polygonal shape exhibiting rounded tips.

10. The device (1) according to claim 9, in which the filament exhibits a profile exhibiting portions of which the projection onto a plane forms a star polygon, preferably comprising rounded tips.

11. The device (1) according to any of claims 6 to 10 in which a flow of cooling fluid generated by an air blower is only directed towards the infrared emitters (6).

12. The device (1) according to claim 11 in which at least one wall preferably from quartz is interposed between the infrared emitters (6) and the preforms (3) such as to isolate the preforms from the flow of cooling fluid.

13. The device (1) according to any of claims 6 to 12, in which the heating module (5) comprises infrared reflectors (9) suited to the wavelength of the emitter.
